Europäisches Patentamt

European Patent Office

Office européen des brevets

(11) Publication number: **0 133 790**
**B1**

(12) # EUROPEAN PATENT SPECIFICATION

(45) Date of publication of patent specification: **18.01.89**

(51) Int. Cl.⁴: **G 11 B 20/12**

(21) Application number: **84305176.4**

(22) Date of filing: **30.07.84**

(54) **Disc playback apparatus.**

(30) Priority: **30.07.83 JP 140749/83**

(43) Date of publication of application:
**06.03.85 Bulletin 85/10**

(45) Publication of the grant of the patent:
**18.01.89 Bulletin 89/03**

(84) Designated Contracting States:
**DE FR GB NL**

(56) References cited:
**EP-A-0 079 669**
**GB-A-2 101 356**
**US-A-4 380 029**
**WIRELESS WORLD, vol. 88, no. 1561, October 1982, Sheepen Place, Olchester, GB; J.R. WATKINSON "Floppy-disc drives", pages 80-82, 84**
**ELECTRICAL DESIGN NEWS, vol. 27, no. 17, September1982, Boston, Massachusetts, USA; C. WARREN "Newest 5 1/4-in. Winchester disk drivesboost capacity in standard-sized packages", pages 51-62**

(73) Proprietor: **SONY CORPORATION**
**7-35 Kitashinagawa 6-Chome Shinagawa-ku Tokyo 141 (JP)**

(72) Inventor: **Furukawa, Shunsuke c/o Patents Division**
**Sony Corporation 7-35 Kitashinagawa-6 Shinagawa-ku Tokyo (JP)**

(74) Representative: **Thomas, Christopher Hugo et al**
**D Young & Co 10 Staple Inn**
**London WC1V 7RD (GB)**

Courier Press, Leamington Spa, England.

## Description

This invention relates to disc playback apparatus and to discs for use with such apparatus.

Optical disc playback apparatus which uses discs, commonly known as compact discs, on which audio information is recorded digitally as a series of so-called pits which can be read optically, are now well known for the high quality stereophonic reproduction of music and other audio information. The data storage capacity of current compact discs is about 500 M bytes, and therefore a compact disc has a very large memory capacity as compared with a floppy disc as used in computers and word processors.

If other digital data, such as video data relating to characters, pictures, charts or text, were recorded on a compact disc, and if it were possible for this data to be reproduced by the optical disc playback apparatus without substantially modifying the basic arrangement of the optical disc playback apparatus, then the utility of the optical disc playback apparatus would be substantially extended, enabling it to be used not only for audio reproduction as now, but also for video reproduction, or for storing computer program data, or for storing different forms of audio data, and also enabling it to be used as video game apparatus.

However, the method of recording the information on compact discs at present is particularly appropriate to the recording of audio data, in particular because when a music programme is recorded and it is desired to search for a particular musical unit in that programme, the musical unit which is being searched for is usually relatively large, corresponding for example to the duration of a single tune or song. However, if the compact disc were to be used as a memory device, for example for storing video information, then data would have to be searched for and read out on a much smaller unit basis, of say 128 bytes to 10 K bytes.

To enable the beginning of a musical unit to be searched for and identified, audio information is currently recorded on compact discs using a sub-coding signal associated with the digital audio data. When the digital audio data is reproduced from the compact disc, it is written in a random access memory (RAM) synchronously with a reproduced bit clock signal, and is then read out from the RAM using a reference clock signal. In this way any variations in the time base, hereinafter referred to as jitter, can be eliminated from the reproduced digital audio data. The sub-coding signal is handled differently, in particular in that it is not written in the RAM. In consequence, when the jitter present on reproduction of the digital audio data has been removed, there may be a significant time difference between the reproduced digital audio data and the reproduced sub-coding signal, and this time difference may fluctuate substantially. As a consequence of this, the method of recording the data now used is not suitable for use in searching for and reproducing relatively small units of data, as the time difference referred to above may mean that when the sub-coding signal is used to access a small unit of data, the desired data block is not read out due to the jitter.

European patent specification EP—A1—0 079 669 discloses an optical disc with digital data recorded thereon, which data are grouped in blocks comprising a header and a block address. The above European patent specification and also 'Wireless World', Vol. 88, No. 1561, October 1982, pages 80 to 82 and 84, and 'Electrical Design News', Vol. 27, No. 17, September 1982 disclose a disc having digital data stored therein is successive blocks, each block comprising a header signal and a block address signal followed by data signals representing information.

According to the present invention there is provided a disc playback apparatus for reproducing a disc having main digital data stored thereon, a predetermined amount of said main digital data constituting one block and said main digital data including a block address signal for each said block, the apparatus comprising:

disc driving means for rotating the disc;

signal reproducing means for obtaining reproduced said main digital data from the disc; and

signal output means for deriving said reproduced main digital data;

said main digital data including a header signal in the beginning of every said block followed by said address signal; wherein

said main digital data being associated with sub-digital data which are distributed over the whole said block between said main digital data and include a predetermined pattern of data bits sequentially changing along a track or tracks to permit location of a desired said block so as selectively to reproduce said main digital data;

said signal reproducing means deriving reproduced said sub-digital data from the disc;

separating means connected to said signal reproducing means for separating said reproduced main digital data from said reproduced sub-digital data;

memory means connected to said separating means for eliminating time-base fluctuation in said reproduced main digital data and producing time-base corrected main digital data; and

control means connected to said separating means and supplied with said reproduced sub-digital data for controlling said disc driving means and/or said signal reproducing means so as to search said stored main digital data using said sub-digital data, to locate a said block including required said main digital data, to detect said header signal, and to detect whether said block address signal is a required one; and

said signal output means deriving said required main digital data.

According to the present invention there is also provided a disc having main digital data stored thereon, a predetermined amount of said main digital data constituting one block, and said main digital data including a header signal and a block address signal following said header signal in the beginning of every said block; wherein said main digital data are associated with sub-digital data which are distributed over the whole said block between said main digital data, and form for each data block a bit pattern including at least a predetermined synchronizing pattern and address data bits sequentially changing along a track or tracks to locate a desired said block so as selectively to reproduce said main digital data.

The invention will now be described by way of example with reference to the accompanying drawings, throughout which like parts are referred to by like references, and in which:

Figures 1 and 2 are diagrams for explaining the arrangement of recorded data on a compact disc;

Figure 3 is a diagram showing the arrangement of one BLOCK of the recorded data on the compact disc;

Figure 4 is a block diagram of an embodiment of disc playback apparatus according to the present invention;

Figure 5 is a diagram showing the word format of the recorded data on the compact disc; and

Figure 6 is a flow chart showing the operation of the embodiment.

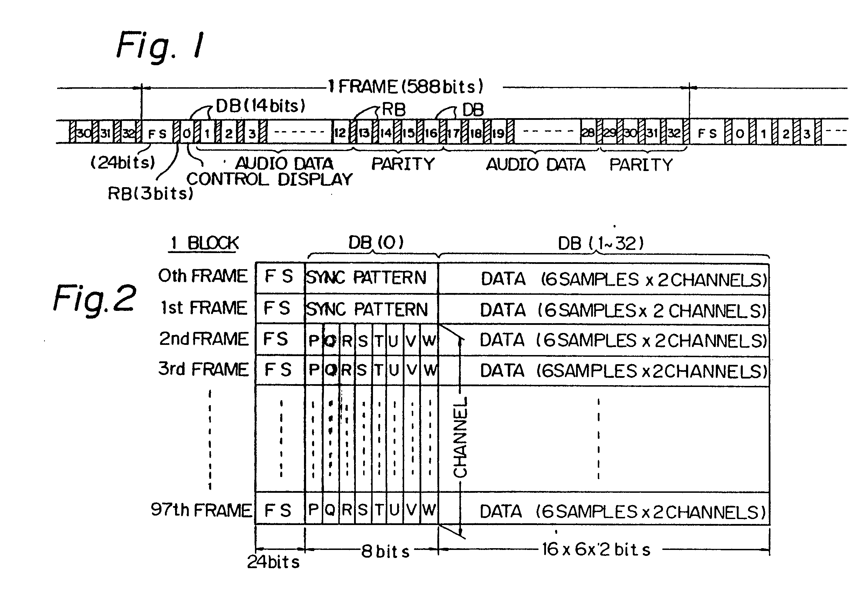

The arrangement of digital data serially recorded in a spiral track on a compact disc as a series of optically readable pits will first be described with reference to Figures 1 and 2.

Figure 1 shows a portion of the digital data. The data is made up of FRAMES, each of which consists of 588 bits of recorded data. Each FRAME consists of a leading 24-bit frame sync signal FS followed by a 3-bit DC-restriction word RB. There then follow 0th to 32nd data words DB each of fourteen bits and 3-bit DC-restriction words RB recorded alternately. Each of the data words DB is derived by conversion of input 8-bit data words to respective 14-bit data words DB on recording. Of the data words DB, the 0th data word is a sub-coding signal sometimes referred to as user's bits, and is used to control the playback of the compact disc, and to convey information concerning the relevant FRAME. The 1st to 12th and 17th to 28th data words DB are used for main channel audio data. The remaining 13th to 16th and 29th to 32nd data words DB are used for parity data, this being used for error correction of the main channel audio data.

Figure 2 shows one BLOCK which consists of 98 FRAMES of the digital data. Purely for the purposes of illustration, the 98 FRAMES are shown to be arranged sequentially in parallel, each of the data words DB is assumed to have been reconverted back to an 8-bit word, and the 3-bit DC-restriction words have been excluded. Following the 24-bit frame sync signal FS in each FRAME, there follows the 0th data word DB consisting of eight bits. These eight bits are designated P to W respectively in each FRAME and form the sub-coding signals. In the description which follows, these bits will be referred to as P channel to W channel as arranged vertically in Figure 2.

The sub-coding signals P to W in the 0th and 1st FRAMES form the block sync pattern, which is a predetermined pattern of bits enabling the BLOCK to be identified. The remaining description of the sub-coding signals the refers to those in the 2nd to 97th FRAME inclusive.

The last sixteen bits in the Q channel are used for cyclic redundancy check (CRC) codes for error detection.

The P channel is used for a flag which indicates whether the data in the FRAME in fact relates to audio information, such as music, or to a pause. Thus the bits in the P channel are "0" throughout the duration of a musical unit and are "1" throughout the duration of a pause. Moreover, the P channel has pulses of 2 Hz period during the lead-out section of the compact disc. It is thus possible to select and playback a specified musical unit in a musical programme by detecting and counting the pauses indicated by the signals in the P channel.

The remainder of the Q channel enables a more complicated control of this type to be used. For example, if the Q channel information is stored in a microcomputer forming part of the optical disc playback apparatus, then it is possible to move quickly from one musical unit to another during the playback of a programme of music, and this enables respective ones of the recorded musical units to be selected for reproduction in a random order.

Considering the Q channel in more detail, the first two bits in this channel are used for a sync pattern, the next four bits are control bits, the next four bits are address bits, the next seventy-two bits are data bits, and the final sixteen bits form the CRC code referred to above. A track number code TNR and an index code X are included in the seventy-two data bits. The track number code TNR can be varied in the range 00 to 99, and the index code X can likewise be varied in the range from 00 to 99. The track number code TNR distinguishes the lead-in track where TNR is 00, the leadout track where TNR is AA, and musical units. The index code X is used for further distinguishing musical units having the same track number TNR. Thus, the index code X can be used, for example, to indicate the movement number of a musical unit which consists of more than one movement. Within the index code X, "00" indicates a pause, and "1" to "99" indicate the index numbers. Additionally, the data in the Q channel contains a time code to indicate the time durations of the musical units and the pauses, and also a time indication code to indicate the absolute time duration measured from the beginning to the end of the programme on the compact disc. These time indication codes comprise codes indicating minutes, seconds and FRAMES, each code consisting of two digits. Each second is divided into 75 FRAMES. In order to access the compact disc on a shorter unit basis than a musical unit, the time indication code with respect to the above-mentioned absolute time duration is used.

The remaining R to W channels can be used for other audio information, such as the title of musical units in a musical programme and details of the composers and performers.

As described above, the minimum unit of change of the sub-coding signal on a compact disc is one BLOCK, that is to say 98 FRAMES. In embodiments of the present invention, where non-audio digital data is to be recorded, one BLOCK' consists of 490 (equals 98 times 5) FRAMES. The beginning of each BLOCK' includes a header signal and an identification signal ID. The remaining FRAMES in the BLOCK' have the format shown in Figure 1, in which instead of the usual audio digital data as shown in Figure 1, some other digital data representing, for example, video information such as characters, pictures or text is inserted. Each FRAME includes twenty-four digital data words so that one BLOCK' includes approximately 11 K data words.

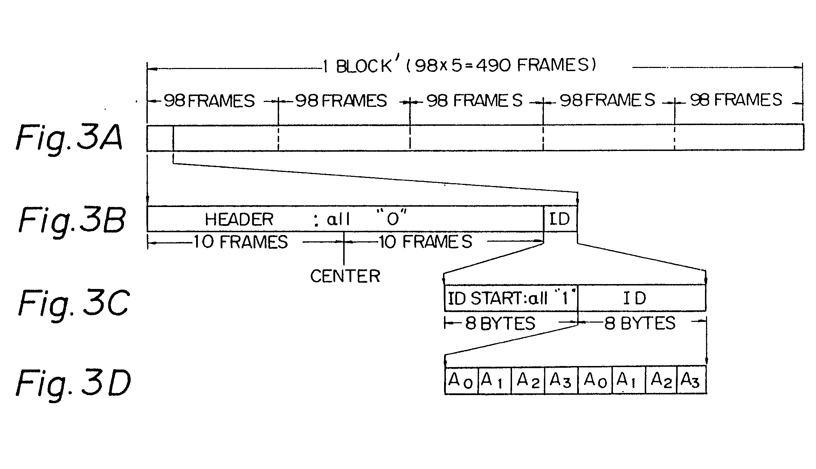

The track number codes TNR in the P and Q channels of the sub-coding signal included in each BLOCK' are the same, and the index code X in the Q channel varies from 01 to 05 so that any specific BLOCK in the BLOCK' can be retrieved using the sub-coding signal. Figure 3A shows one BLOCK' consisting of 490 FRAMES. Figure 3B shows the beginning of the BLOCK' in more detail. The beginning of the BLOCK' consists of the header signal consisting of bits "0" repeated throughout the first 20 FRAMES. The centre of the header signal is taken as the actual start point of the BLOCK', when there is no jitter in the reproduced sub-coding signal. What this means is that there will be satisfactory reproduction if the jitter does not exceed an amplitude of ±10 FRAMES. During normal reproduction of a compact disc, the maximum jitter is ±4 FRAMES, so that providing a header signal of this duration is sufficient to ensure that no problems arise in normal reproduction as a result of jitter.

Following the end of the header signal, the identification signal ID follows as shown in Figure 3C. The identification signal ID consists of a start signal of eight words in which all the bits are "1" and a further signal of eight words in which, as shown in Figure 3D four address words A0, A1, A2 and A3 are repeated twice. The address words A0, A1, A2 and A3 form an individual address for the respective BLOCK'.

Digital data signals in the format shown in Figure 3 can be recorded on a compact disc in the same manner as audio digital data signals are recorded on a compact disc. That is, the digital signal, such as a digital video signal, to be recorded is supplied to a digital input terminal of a digital audio processor and the digital input signal is converted into a video signal format, so that it can be recorded using a rotary head type video tape recorder. As a preliminary, data relating to a table of contents (TOC) from which data used to generate the sub-coding signal is derived is recorded in a longitudinal audio track on the magnetic tape on which the video format digital signal is then recorded. Next, the TOC data reproduced from the magnetic tape is supplied to a sub-coding signal generator. The reproduced video format digital signal and the sub-coding signal are then supplied to an encoder, and a laser beam is modulated in dependence on the basis of the output of the encoder. A master disc is cut using this modulated laser beam.

In an alternative method of recording the digital signal, the data is first stored in a hard disc memory that can be accessed at high speed by a minicomputer, which supplies a digital signal in real time to an encoder which modulates a laser beam.

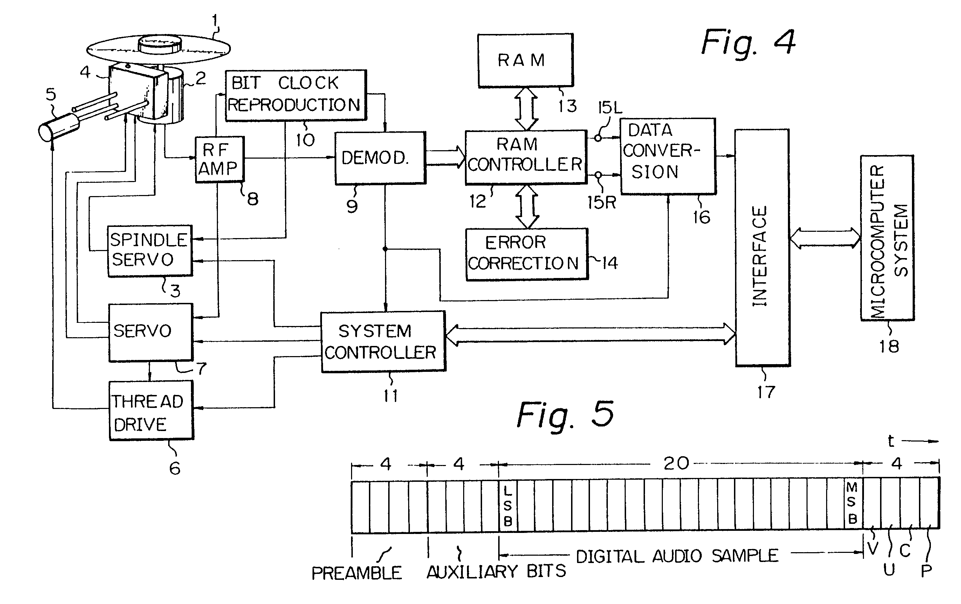

Figure 4 shows in block form one embodiment of optical playback apparatus according to the invention. A compact disc 1 has a digital signal of the above described format and including non-audio digital data, such as video data or computer program data, spirally recorded thereon. The compact disc 1 is rotated by a spindle motor 2 controlled by a servo circuit 3, so that the compact disc 1 rotates at a constant linear velocity.

An optical head 4 of known form includes a laser for generating a laser beam for pick-up, a beam splitter, an optical system including an objective lens, and a photodetecting device for receiving the reflected laser beam from the compact disc 1. The optical head 4 can be moved in the radial direction of the compact disc 1 by a thread feed motor 5 driven by a drive circuit 6. The optical head 4 can be deflected both in the direction perpendicular to the signal surface of the compact disc 1 and in the direction parallel thereto, and it is servo controlled by a focusing and tracking servo circuit 7 so that the focusing and tracking of the laser beam upon playback are maintained.

A reproduced signal derived by the optical head 4 is supplied to a radio frequency (RF) amplifier 8. The optical head 4 is provided with a focus error detecting device comprising, for example, the combination of a cylindrical lens and a four-part photodetector, and a tracking error detecting device using three laser spots. The resulting error signals are supplied to the servo circuit 7. An output signal of the RF amplifier 8 is supplied to a digital demodulator 9 and a bit clock reproduction circuit 10. The digital signal recorded on the compact disc 1 has been 8-bit to 14-bit modulated (EFM) modulated. The EFM is a method of converting 8-bit data words into preferred 14-bit data words, the 14-bit data words being selected to give a relatively long minimum transition time period of the modulated signal, and to reduce the low-frequency components of the modulated signal. The digital demodulator 9 re-converts the 14-bit data words to 8-bit data words. The bit clock derived by a bit clock reproduction circuit 10 is supplied to the digital demodulator 9 and to the spindle servo circuit 3.

The sub-coding signal is separated by the digital demodulator 9 and the separated sub-coding signal is supplied to a system controller 11. The system controller 11 includes a central processing unit (CPU), and the rotation of the compact disc 1, the thread feeding operation, and the reading operation of the optical head 4, are controlled by the system controller 11. Control commands are supplied to the system controller 11 through an interface 17, that will be described later. Thus, the reading of a desired digital data signal from the compact disc 1 using the sub-coding signal is controlled by the system controller 11.

The main digital data output from the digital demodulator 9 is supplied through a RAM controller 12 to a RAM 13 and an error correction circuit 14. Processing to eliminate jitter, and to effect error correction and error concealment are carried out by the RAM controller 12, the RAM 13 and the error correction circuit 14, so that the main digital data is developed at terminals 15L and 15R. Upon playback of a compact disc on which audio data has been recorded, respective digital-to-analog converters are connected to these terminals 15L and 15R. However, in the present case where non-audio data is recorded, the reproduced digital data is supplied to a data converter 16. The reproduced sub-coding signal is also supplied to the data converter 16, and the reproduced data is converted into the form of a serial signal.

This serial signal is supplied to the interface 17, and the data for the system controller 11 is supplied from a microcomputer system 18 through the interface 17 to the system controller 11. The interface 17 and the microcomputer system 18 detect the header signal and read out the identification signal ID. The microcomputer system 18 specifies a read-out address in the identification signal ID and applies control signals such as start signals in addition to this read-out address to the interface 17 and the system controller 11. A list showing the correlation between the sub-coding signals and the ID signals, and the addresses is recorded in the innermost lead-in track on the compact disc 1 using the sub-coding signal as addresses. This list is reproduced initially to start the read-out of the compact disc 1 and is read by the microcomputer system 18, so that any required non-audio data can then be located and read out.

Figure 5 shows an example of the word format of the serial signal output from the data converter 16. For this serial signal, one word consists of thirty-two bits. The first four bits form a preamble, and normally the next four bits would have been auxiliary bits of the audio data, and the next twenty bits would have represented a digital audio sample. In the case where the digital audio sample consists of sixteen bits, the sixteen bits from the least significant bit (LSB) are used, and four bits are added after the digital audio sample. Of these four bits, the first bit V is a flag to show whether the digital audio sample of the word is effective or not, the second bit U is the subcooling signal, the third bit C is a bit to identify the channel, and the fourth bit P is a parity bit. The bit U of the sub-coding signal is inserted into each word format bit-by-bit and these inserted bits are sequentially transmitted.

In one embodiment of the present invention, a read instruction relating to a predetermined address is first executed by the microcomputer system 18. The address and a control signal are supplied to the microcomputer system 18. The address is converted to the corresponding sub-coding signal in the interface 17 and is supplied to the system controller 11. The system controller 11 controls the thread drive circuit 6 to move the optical head 4 to a location a few BLOCKS' from the desired read-out location, while monitoring the sub-coding signal reproduced by the optical head 4. This displaced location is used to prevent misoperation if, for example, the reproduced sub-coding signal includes an error. The exact location where the reproduced sub-coding signal is identical with the set sub-coding signal is then found by counting the reproduced sub-coding signals, the frame sync signal and the header.

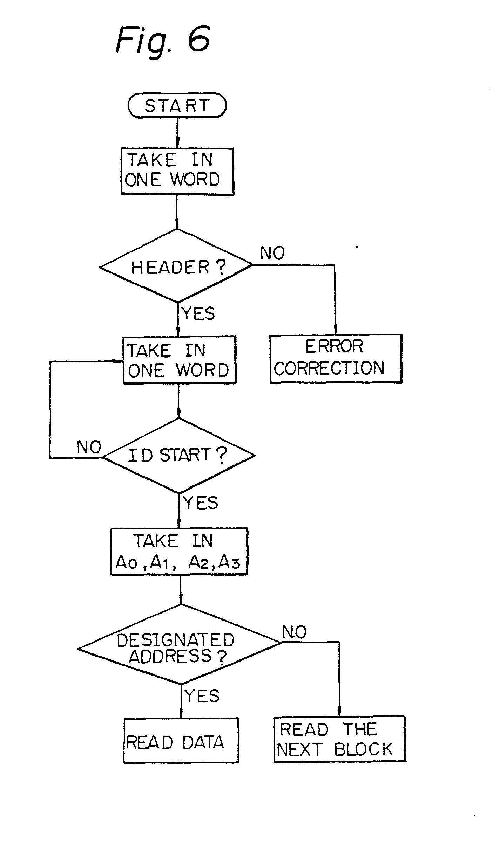

At the designated BLOCK' corresponding to the sub-coding signal or nearby, the microcomputer 18 operates according to the flow chart as shown in Figure 6. First of all, one word of the reproduced main channel digital data is examined to discriminate whether it is the header or not. When the header is not detected at the beginning of the BLOCK', it means the jitter exceeds the tolerance range, so that servo control needs to be carried out. When the header is detected, the word is examined to discriminate whether it is the start signal or not.

After detecting the start signal, the identification signal ID and the address words A0, A1, A2 and A3 are taken in. The address words A0 and A1 correspond to two successive words of the L channel, and the address words A2 and A3 correspond to two successive words of the R channel. The repetition of the four address words A0, A1, A2 and A3 makes misoperation unlikely. This identification signal ID and in particular the four address words A0, A1, A2 and A3 are checked to see if it is the designated address or not. If it is the designated address, the BLOCK' is read in by the microcomputer 18. If it is not, the next BLOCK' is checked.

It is possible to add to the optical disc playback apparatus means for selecting either a digital-to-analog converter or the system controller 11, so that when playing back a compact disc either stereophonic musical signals or non-audio data signals may be reproduced. It is also possible to insert the accessing code signals for which the coding process of the error correcting code has been preformed in other R and W channels in the sub-coding signals.

Thus, by adding a data processing section such as a microcomputer and a display device, such as a colour cathode ray tube, in the form of an adaptor to a standard optical disc playback apparatus, it is possible to play back not only audio information but also video information, thereby enlarging the range of use of the playback apparatus while maintaining consistency with respect to the signal format and error correction. The invention is also applicable to disc playback apparatus and to discs which are reproduced non-optically.

**Claims**

1. A disc playback apparatus for reproducing a disc (1) having main digital data (DB1 to DB32) stored thereon, a predetermined amount of said main digital data (DB1 to DB32) constituting one block (BLOCK) and said main digital data (DB1 to DB32) including a block address signal (ID) for each said block (BLOCK), the apparatus comprising:

disc driving means (2, 3) for rotating the disc (1);·

signal reproducing means (4, 5, 6, 7, 8) for obtaining reproduced said main digital data (DB1 to DB32) from the disc (1); and

signal output means (15L, 15R, 16, 17) for deriving said reproduced main digital data (DB1 to DB32);

said main digital data (DB1 to DB32) including a header signal (HEADER) in the beginning of every said block (BLOCK) followed by said address signal (ID); wherein

said main digital data (DB1 to DB32) being associated with sub-digital data (DB0) which are distributed over the whole said block (BLOCK) between said main digital data (DB1 to DB32) and include a predetermined pattern of data bits (Q) sequentially changing along a track or tracks to permit location of a desired said block (BLOCK) so as selectively to reproduce said main digital data (DB1 to DB32);

said signal reproducing means (4, 5, 6, 7, 8) deriving reproduced said sub-digital data (DB0) from the disc (1);

separating means (9) connected to said signal reproducing means (4, 5, 6, 7, 8) for separating said reproduced main digital data (DB1 to DB32) from said reproduced sub-digital data (DB0);

memory means (12, 13) connected to said separating means (9) for eliminating time-base fluctuation in said reproduced main digital data (DB1 to DB32) and producing time-base corrected main digital data (DB1 to DB32); and

control means (11) connected to said separating means (9) and supplied with said reproduced sub-digital data (DB0) for controlling said disc driving means (2, 3) and/or said signal reproducing means (4, 5, 6, 7, 8) so as to search said stored main digital data (DB1 to DB32) using said sub-digital data (DB0), to locate a said block (BLOCK) including required said main digital data (DB1 to DB32), to detect said header signal (HEADER), and to detect whether said block address signal (ID) is a required one; and

said signal output means (15L, 15R, 16, 17) deriving said required main digital data (DB1 to DB32).

2. Apparatus according to claim 1 wherein said required main digital data (DB1 to DB32) comprises a video signal.

3. Apparatus according to claim 2 wherein said signal output means (15L, 15R, 16, 17) is connected to a video display device (18).

4. Apparatus according to claim 3 wherein said required main digital data (DB1 to DB32) comprises computer program data.

5. Apparatus according to claim 1 wherein the length of said header signal (HEADER) corresponds to relative variation in the time base between said time-base corrected main digital data (DB1 to DB32) and said reproduced sub-digital data (DB0).

6. Apparatus according to claim 1 wherein said header signal (HEADER) includes a predetermined number of bytes each indicating the digital value "0".

7. Apparatus according to claim 1 wherein said block address signal (ID) includes a start signal (ID START) having bits of digital value "1" and address data (ID).

8. Apparatus according to claim 7 wherein said address data (ID) consists of a predetermined number of bytes ($A_0$, $A_1$, $A_2$, $A_3$) indicating one address, said bytes ($A_0$, $A_1$, $A_2$, $A_3$) being repeated at least once.

9. Optical playback apparatus according to any one of the preceding claims.

10. A disc having main digital data (DB1 to DB32) stored thereon, a predetermined amount of said main digital data (DB1 to DB32) constituting one block (BLOCK), and said main digital data (DB1 to DB32) including a header signal (HEADER) and a block address signal (ID) following said header signal (HEADER) in the beginning of every said block (BLOCK); wherein

said main digital data (DB1 and DB32) are associated with sub-digital data (DB0) which sub-digital data (DB0) are distributed over the whole said block (BLOCK) between said main digital data (DB1 to DB32), and form for each data block a bit pattern including at least a predetermined synchronizing pattern and address data bits (Q) sequentially changing along a tack or tracks to locate a desired said block (BLOCK) so as selectively to reproduce said main digital data (DB1 to DB32).

11. A disc according to claim 10 wherein each said block (BLOCK) further comprises a start signal (ID START) following said header signal (HEADER).

12. A disc according to claim 10 or claim 11 wherein said header signal (HEADER) includes a predetermined number of bytes each indicating the digital value "0".

13. A disc according to claim 11 wherein said start signal (ID START) comprises bits of digital value "1".

14. A disc according to any one of claims 10 to 13 wherein said block address signal (ID) consists of a predetermined number of bytes ($A_0$, $A_1$, $A_2$, $A_3$) indicating one address, said bytes ($A_0$, $A_1$, $A_2$, $A_3$) being repeated at least once.

15. A disc according to claim 10 wherein said main digital data (DB1 to DB32) comprises a video signal.

16. A disc according to claim 10 wherein said main digital data (DB1 to DB32) comprises computer program data.

17. A disc according to claim 10 wherein the length of said header signal (HEADER) corresponds to relative variation in the time base between said time-base corrected main digital data (DB1 to DB32) and said reproduced subdigital data (DB0).

18. An optical disc according to any one of claims 10 to 17.

### Patentansprüche

1. Plattenwiedergabegerät zur Reproduktion einer Platte (1), auf der digitale Hauptdaten (DB1 bis DB32) gespeichert sind, wobei eine vorbestimmte Menge dieser digitalen Hauptdaten (DB1 bis DB32) einen Block (BLOCK) bildet und die digitalen Hauptdaten (DB1 bis DB32) jeweils ein Blockadressensignal (ID) für jeden solchen Block (BLOCK) enthalten,

und wobei die digitalen Hauptdaten (DB1 bis DB32) am Beginn jedes Blocks (BLOCK) ein Kopfsignal (HEADER) enthalten, auf welches das genannte Adressensignal folgt,

mit einer Plattenantriebseinrichtung (2, 3) zum Drehen der Platte (1),

mit einer Signalreproduktionseinrichtung (4, 5, 6, 7, 8) zur Reproduktion der digitalen Hauptdaten (DB1 bis DB32) von der Platte (1),

sowie mit einer Signalausgabeeinrichtung (15L, 15R, 16, 17) zur Herleitung der reproduzierten digitalen Hauptdaten (DB1 bis DB32), wobei den digitalen Hauptdaten (DB1 bis DB32) digitale Hilfsdaten (DB0) zugeordnet sind, die über den gesamten Block (BLOCK) zwischen die digitalen Hauptdaten (DB1 bis DB32) verteilt sind und ein vorbestimmtes Muster an Datenbits enthalten, die längs einer Spur oder längs Spuren sequentiell variieren, um einen gewünschten Block (BLOCK) so lokalisieren zu können, daß die digitalen Hauptdaten (DB1 bis DB32) selektiv reproduzierbar sind,

die Signalreproduktionseinrichtung (4, 5, 6, 7, 8) die digitalen Hilfsdaten (DB0) von der Platte (1) reproduzieren,

die Signalreproduktionseinrichtung (4, 5, 6, 7, 8) mit einer Trenneinrichtung (9) verbunden ist, die dazu dient, die reproduzierten digitalen Hauptdaten (DB1 bis DB32) von den reproduzierten digitalen Hilfsdaten (DB0) zu trennen,

die Trenneinrichtung (9) mit einer Speichereinrichtung (12, 13) verbunden ist, die dazu dient, Zeitbasisschwankungen in den reproduzierten digitalen Hauptdaten (DB1 bis DB32) zu eliminieren und digitale Hauptdaten (DB1 bis DB32) mit korrigierter Zeitbasis zu erzeugen,

die Trenneinrichtung (9) mit einer Steuereinrichtung (11) verbunden ist, der die reproduzierten digitalen Hilfsdaten (DB0) zugeführt werden, um die Plattenantriebseinrichtung (2, 3) und/oder die Signalreproduktionseinrichtung (4, 5, 6, 7, 8) so zu steuern, daß die gespeicherten digitalen Hauptdaten (DB1 bis DB32) unter Verwendung

der digitalen Hilfsdaten (DB0) aufgesucht werden, der die gewünschten digitalen Hauptdaten (DB1 bis DB32) enthaltende Block (BLOCK) lokalisiert wird, das Kopfsignal (HEADER) detektiert wird, und festgestellt wird, ob das Blockadressensignal (ID) ein gesuchtes Blockadressensignal ist,

und die Signalausgabeeinrichtung (15L, 15R, 16, 17) die gewünschten digitalen Hauptdaten (DB1 bis DB32) herleitet.

2. Gerät nach Anspruch 1, bei dem die gewünschten digitalen Hauptdaten (DB1 bis DB32) ein Videosignal enthalten.

3. Gerät nach Anspruch 2, bei dem die Signalausgabeeinrichtung (15L, 15R, 16, 17) mit einer Video-Anzeigeeinrichtung (18) verbunden ist.

4. Gerät nach Anspruch 3, bei dem die gewünschten digitalen Hauptdaten (DB1 bis DB32) Computerprogrammdaten enthalten.

5. Gerät nach Anspruch 1, bei dem die Länge des Kopfsignals (HEADER) der relativen Änderung der Zeitbasis zwischen den digitalen Hauptdaten (DB1 bis DB32) mit korrigierter Zeitbasis und den reproduzierten digitalen Hilfsdaten (DB0) entspricht.

6. Gerät nach Anspruch 1, bei dem das Kopfsignal (HEADER) eine vorbestimmte Anzahl von Bytes mit dem Digitalwert "0" enthält.

7. Gerät nach Anspruch 1, bei dem das Blockadressensignal (ID) ein Startsignal (ID START) mit Bits mit dem Digitalwert "1" sowie Adressendaten (ID) enthält.

8. Gerät nach Anspruch 7, bei dem die Adressendaten aus einer vorbestimmten Anzahl von Bytes ($A_0$, $A_1$, $A_2$, $A_3$) bestehen, die eine Adresse bezeichnen und wenigstens einmal wiederholt werden.

9. Optisches Wiedergabegerät nach einem der vorhergehenden Ansprüche.

10. Platte, auf der digitale Hauptdaten (DB1 bis DB32) gespeichert sind, wobei eine vorbestimmte Menge dieser digitalen Hauptdaten (DB1 bis DB32) einen Block (BLOCK) bildet und die digitalen Hauptdaten (DB1 bis DB32) ein Kopfsignal (HEADER) und ein Blockadressensignal (ID) enthalten, das auf das Kopfsignal (HEADER) zu Beginn jedes Blocks (BLOCK) folgt, bei der

den digitalen Hauptdaten (DB1 bis DB32) digitale Hilfsdaten (DB0) zugeordnet sind, die über den gesamten Block (BLOCK) zwischen den digitalen Hauptdaten (DB1 bis DB32) verteilt sind und für jeden Datenblock ein Bitmuster bilden, das wenigstens ein vorbestimmtes Synchronisierungsmuster sowie Adressendatenbits (Q) enthält, die längs einer Spur oder längs Spuren sequentiell variieren, um einen gewünschten Block (BLOCK) so lokalisieren zu können, daß die digitalen Hauptdaten (DB1 bis DB32) selektiv reproduzierbar sind.

11. Platte nach Anspruch 10, bei der jeder Block (BLOCK) ferner ein Startsignal (ID START) umfaßt, das auf das Kopfsignal (HEADER) folgt.

12. Platte nach Anspruch 10 oder 11, bei der das Kopfsignal (HEADER) eine vorbestimmte Anzahl von Bytes mit dem Digitalwert "0" enthält.

13. Platte nach Anspruch 11, bei der das Startsignal (ID START) Bits mit dem Digitalwert "1" enthält.

14. Platte nach einem der Ansprüche 10 bis 13, bei der das Blockadressensignal (ID) aus einer vorbestimmten Anzahl von Bytes ($A_0$, $A_1$, $A_2$, $A_3$) bestehen, die eine Adresse bezeichnen und wenigstens einmal wiederholt werden.

15. Platte nach Anspruch 10, bei der gewünschten digitalen Hauptdaten (DB1 bis DB32) ein Videosignal enthalten.

16. Platte nach Anspruch 10, bei der gewünschten digitalen Hauptdaten (DB1 bis DB32) Computerprogrammdaten enhalten.

17. Platte nach Anspruch 10, bei der die Länge des Kopfsignals (HEADER) der relativen Änderung der Zeitbasis zwischen den digitalen Hauptdaten (DB1 bis DB32) mit korrigierter Zeitbasis und den reproduzierten digitalen Hilfsdaten (DB0) entspricht.

18. Optische Platte nach einem der Ansprüche 10 bis 17.

## Revendications

1. Appareil de reproduction de disque permettant de reproduire un disque (1) sur lequel sont emmagasinées des données numériques principales (DB1 à DB32), une quantité prédéterminée desdites données numériques principales (DB1 à DB32) constituant un bloc (bloc) et lesdites données numériques principales (DB1 à DB32) comportant un signal (ID) d'adresse de bloc pour chaque dit bloc (bloc), l'appareil comprenant:

un moyen d'entraînement de disque (2, 3) servant à faire tourner le disque (1);

un moyen de reproduction de signal (4, 5, 6, 7, 8) servant à obtenir la reproduction desdites données numériques principales (DB1 à DB32) à partir du disque (1); et

un moyen de sortie de signal (15L, 15R, 16, 17) servant à extraire lesdites données numériques principales reproduites (DB1 à DB32);

lesdites données numériques principales (DB1 à DB32) comportant un signal d'en-tête (en-tête) au début de chaque dit bloc (bloc) suivi par ledit signal d'adresse (ID); où

lesdites données numériques principales (DB1 à DB32) se trouvant associées avec des sous-données numériques (DB0) qui sont réparties sur l'ensemble dudit bloc (bloc) entre lesdites données principales (DB1 à DB32) et comportent une configuration prédéterminée de bits de données (Q) changeant séquentiellement le long d'une ou plusieurs pistes afin de permettre la localisation d'un dit bloc voulu (bloc) de manière à sélectivement reproduire lesdites données numériques principales (DB1 à DB32);

ledit moyen de reproduction de signaux (4, 5, 6, 7, 8) produisant lesdites sous-données numériques reproduites (DB0) à partir du disque (1);

un moyen de séparation (9) connecté audit moyen de reproduction de signal (4, 5, 6, 7, 8) servant à séparer lesdites données numériques principales reproduites (DB1 à DB32) vis-à-vis desdites sous-données numériques reproduites (DB0);

un moyen de mémorisation (12, 13) connecté audit moyen de séparation (9) et servant à éliminer les fluctuations de base de temps dans lesdites données numériques principales reproduites (DB1 à DB32) et à produire les données numériques principales corrigées du point de vue de la base de temps (DB1 à DB32); et

un moyen de commande (11) connecté audit moyen de séparation (9) et recevant lesdites sous-données numériques reproduites (DB0) afin de commander ledit moyen d'entraînement de disque (2, 3) et, ou bien, ledit moyen de reproduction de signal (4, 5, 6, 7, 8) de manière à retrouver lesdites données numériques principales emmagasinées (DB1 à DB32) à l'aide desdites sous-données numériques (DB0), à localiser un dit bloc (bloc) comportant lesdites données numériques principales voulues (DB1 à DB32), à détecter ledit signal d'en-tête (en-tête), et à déterminer si ledit signal d'adresse de bloc (ID) est ou non un signal voulu; et

ledit moyen de sortie de signal (15L, 15R, 16, 17) donnant lesdites données numériques principales voulues (DB1 à DB32).

2. Appareil selon la revendication 1, où lesdites données numériques principales voulues (DB1 à DB32) consistent en un signal vidéo.

3. Appareil selon la revendication 2, où ledit moyen de sortie de signal (15L, 15R, 16, 17) est connecté à un dispositif d'affichage vidéo (18).

4. Appareil selon la revendication 3, où lesdites données numériques principales voulues (DB1 à DB32) consistent en des données de programme de calculateur.

5. Appareil selon la revendication 1, où la longueur dudit signal d'en-tête (en-tête) correspond à une variation relative de la base de temps entre lesdites données numériques principales corrigées du point de vue de la base de temps (DB1 à DB32) et lesdites sous-données numériques reproduites (DB0).

6. Appareil selon la revendication 1, où ledit signal d'en-tête (en-tête) comporte un nombre prédéterminé de bytes indiquant chacun la valeur numérique "0".

7. Appareil selon la revendication 1, où ledit signal d'adresse de bloc (ID) comporte un signal de démarrage (démarrage ID) possédant des bits de valeur numérique "1" et des données d'adresse (ID).

8. Appareil selon la revendication 7, où lesdites données d'adresse (ID) consistent en un nombre prédéterminé de bytes ($A_0$, $A_1$, $A_2$, $A_3$) indiquant une unique adresse, lesdits bytes ($A_0$, $A_1$, $A_2$, $A_3$) étant répétés au moins une fois.

9. Appareil de reproduction optique selon l'une quelconque des revendications précédentes.

10. Disque sur lequel sont enregistrées des données numériques principales (DB1 à DB32), une quantité prédéterminée desdites données numériques principales (DB1 à DB32) constituant un bloc (bloc), et lesdites données numériques principales (DB1 à DB32) comportant un signal d'en-tête (en-tête) et un signal d'adresse de bloc (ID) suivant ledit signal d'en-tête (en-tête) au début de chaque dit bloc (bloc); où

lesdites données numériques principales (DB1 à DB32) sont associées à des sous-données numériques (DB0), lesquelles sous-données numériques (DB0) sont réparties sur l'ensemble dudit bloc (bloc) entre lesdites données numériques principales (DB1 à DB32), et forment pour chaque bloc de données une configuration de bits comportant au moins une configuration de synchronisation et des bits de données d'adresse (Q) changeant séquentiellement le long d'une ou plusieurs pistes afin de localiser un dit bloc voulu (bloc) de manière à sélectivement reproduire lesdites données numériques principales (DB1 à DB32).

11. Disque selon la revendication 10, où chaque dit bloc (bloc) comprend en outre un signal de début (début ID) faisant suite audit signal d'en-tête (en-tête).

12. Disque selon la revendication 10 ou 11, où ledit signal d'en-tête (en-tête) comprend un nombre prédéterminé de bytes indiquant chacun la valeur numérique "0".

13. Disque selon la revendication 11, où ledit signal de début (début ID) comprend des bits de valeur numérique "1".

14. Disque selon l'une quelconque des revendications 10 à 13, où ledit signal d'adresse de bloc (ID) est constitué d'un nombre prédéterminé de bytes ($A_0$, $A_1$, $A_2$, $A_3$) indiquant une seule adresse, lesdits bytes ($A_0$, $A_1$, $A_2$, $A_3$) étant répétés au moins une fois.

15. Disque selon la revendication 10, où lesdites données numériques principales (DB1 à DB32) consistent en un signal vidéo.

16. Disque selon la revendication 10, où lesdites données numériques principales (DB1 à DB32) consistent en des données de programme d'ordinateur.

17. Disque selon la revendication 10, où la longueur dudit signal d'en-tête (en-tête) correspond à la variation relative de la base de temps entre lesdites données numériques principales corrigées du point de vue de la base de temps (DB1 à DB32) et lesdites sous-données numériques reproduites (DB0).

18. Disque optique selon l'une quelconque des revendications 10 à 17.

*Fig. I*

1 FRAME (588 bits)

DB (14 bits)

RB

DB

F S | 0 | 1 | 2 | 3 | ----- | 12 | 13 | 14 | 15 | 16 | 17 | 18 | 19 | ----- | 28 | 29 | 30 | 31 | 32

F S | 0 | 1 | 2 | 3 | -----

(24 bits)

RB (3 bits)

AUDIO DATA   PARITY   CONTROL DISPLAY   PARITY   AUDIO DATA   PARITY

*Fig.2*

1 BLOCK

DB (0)                     DB (1~32)

| | | SYNC PATTERN | DATA (6 SAMPLES × 2 CHANNELS) |
| 0th FRAME | F S | SYNC PATTERN | DATA (6 SAMPLES × 2 CHANNELS) |
| 1st FRAME | F S | SYNC PATTERN | DATA (6 SAMPLES × 2 CHANNELS) |
| 2nd FRAME | F S | P Q R S T U V W | DATA (6 SAMPLES × 2 CHANNELS) |
| 3rd FRAME | F S | P Q R S T U V W | DATA (6 SAMPLES × 2 CHANNELS) |
| | | | |
| 97th FRAME | F S | P Q R S T U V W | DATA (6 SAMPLES × 2 CHANNELS) |

CHANNEL

24 bits   8 bits   16 × 6 × 2 bits

*Fig.3A*

1 BLOCK' (98×5=490 FRAMES)

98 FRAMES — 98 FRAMES — 98 FRAMES — 98 FRAMES — 98 FRAMES

*Fig.3B*

HEADER : all "0" | ID

10 FRAMES — 10 FRAMES

CENTER

*Fig. 3C*

ID START:all "1" | ID

8 BYTES — 8 BYTES

*Fig. 3D*

$A_0$ | $A_1$ | $A_2$ | $A_3$ | $A_0$ | $A_1$ | $A_2$ | $A_3$

Fig. 4

RAM  13

BIT CLOCK REPRODUCTION

RF AMP  8

10

DEMOD.  9

RAM CONTROLLER  12

15L

DATA CONVERSION  16

15R

INTERFACE  17

MICROCOMPUTER SYSTEM  18

ERROR CORRECTION  14

SPINDLE SERVO  3

SERVO  7

THREAD DRIVE  6

SYSTEM CONTROLLER  11

4  2  5  1

Fig. 5

t →

4  4  20  4

LSB

MSB

V  C  P

U

PREAMBLE  AUXILIARY BITS  DIGITAL AUDIO SAMPLE

EP 0 133 790 B1

*Fig. 6*

START

TAKE IN
ONE WORD

HEADER ? — NO → ERROR
CORRECTION

YES

TAKE IN
ONE WORD

NO ← ID START ?

YES

TAKE IN
$A_0$, $A_1$, $A_2$, $A_3$

DESIGNATED
ADDRESS ? — NO → READ THE
NEXT BLOCK

YES

READ DATA